Europäisches Patentamt

European Patent Office

Office européen des brevets

(11) Veröffentlichungsnummer: **0 429 857 A1**

(12) # EUROPÄISCHE PATENTANMELDUNG

(21) Anmeldenummer: 90120504.7

(22) Anmeldetag: 25.10.90

(51) Int. Cl.⁵: **G05B 19/18**, G01B 21/04

(30) Priorität: 27.11.89 CH 4238/89

(43) Veröffentlichungstag der Anmeldung:
05.06.91 Patentblatt 91/23

(84) Benannte Vertragsstaaten:
**AT BE CH DE FR GB IT LI LU NL SE**
Patentblatt 3

(71) Anmelder: **Knapp, Wolfgang, Dr.**
**La Sauge**
**CH-1534 Sassel(CH)**

(72) Erfinder: **Knapp, Wolfgang, Dr.**
**La Sauge**
**CH-1534 Sassel(CH)**
Erfinder: **Hrovat, Stojan**
**Trottenstrasse 79**
**CH-8037 Zürich(CH)**

(74) Vertreter: **EGLI-EUROPEAN PATENT**
**ATTORNEYS**
**Horneggstrasse 4**
**CH-8008 Zürich(CH)**

(54) **Verfahren zur Messung der Abweichung zwischen Bewegungen einer Maschine, die um eine Drehachse und mit zwei Translationsachsen erzeugt werden.**

(57) Ein erster Maschinenteil rotiert um eine Drehachse. Eine Kreisbewegung eines zweiten Maschinenteils erfolgt ohne Rotation, durch Translation zumindest des zweiten Maschinenteils entlang zwei Translationsachsen (X,Y) in einer Bewegungsebene (XY). Das Zentrum (O) der Kreisbahn (C1) liegt auf der Drehachse.

Am einen Maschinenteil ist ein Abtaster (5), am anderen eine Antastfläche (8) angeordnet. Der Abtaster (5) ist in der Bewegungsebene (XY) kreisförmig (C0) und in zwei Messrichtungen (A,B) empfindlich. Er ist ausserhalb der Drehachse angeordnet. Vor der Messung erfährt der Abtaster (5) von der Antastfläche (8) eine Soll-Auslenkung (d). Die Auslenkungen des Abtasters (5) werden kartesisch abgebildet. Vorzugsweise umfasst die Antastfläche (8) eine oder mehrere zur Drehachse parallele Ebenen (E1,E2)

Die Drehbewegung und die Kreisbewegung werden aufeinander abgestimmt, damit der Abtaster (5) bei konstanter Soll-Auslenkung eine zur Kreisbahn (C1) konzentrische Hilfskreisbahn (C2) beschreibt. Die Ist-Auslenkung wird dargestellt und mit der kreisförmigen Soll-Auslenkung verglichen.

Das Verfahren eignet sich zur Messung von Fehlern und zur Kontrolle der Qualität von Bewegungen einer Maschine, die um eine Drehachse und/oder mit zwei Translationsachsen erzeugt werden.

*Fig.3*

EP 0 429 857 A1

## VERFAHREN ZUR MESSUNG DER ABWEICHUNG ZWISCHEN BEWEGUNGEN EINER MASCHINE, DIE UM EINE DREHACHSE UND MIT ZWEI TRANSLATIONSACHSEN ERZEUGT WERDEN

Die Erfindung liegt auf dem Gebiet der geometrischen Messtechnik zur Messung der Abweichungen zwischen Ist- und Soll-Bewegungen von Maschinen, insbesondere bei der Abnahmeprüfung einer Maschine, und betrifft ein Verfahren zur Messung der Abweichung einer Drehbewegung eines ersten Teils einer Maschine von einer Kreisbewegung eines zweiten Teils derselben Maschine, insbesondere bei einer numerisch gesteuerten Werkzeugmaschine, wobei

- die Drehbewegung durch Rotation des ersten Maschinenteils um eine Drehachse erzeugt wird,
- die Kreisbewegung durch Translation des zweiten Maschinenteils entlang zwei Translationsachsen erzeugt wird, derart, dass der zweite Maschinenteil eine Kreisbahn um ein Zentrum davon beschreibt, ohne eine Rotation relativ zum ersten Maschinenteil auszuführen,
- die Translationsachsen eine im wesentlichen rechtwinklig zu Drehachse liegende Bewegungsebene definieren, wobei die Kreisbahn in dieser Bewegungsebene liegt,
- am einen der Maschinenteile ein Abtaster angeordnet wird, der in der Bewegungsebene einen kreisförmigen Querschnitt mit einem Zentrum aufweist und stets in zwei zur Bewegungsebene parallelen Messrichtungen zugleich empfindlich ist,
- am anderen Maschinenteil eine Antastfläche angeordnet wird,
- der Abtaster vor der Messung relativ zur Antastfläche so angeordnet und daran angedrückt wird, dass er in der Bewegungsebene eine Soll-Auslenkung erfährt, und
- die auf die Messrichtungen projizierten Auslenkungen des Abtasters in elektrische Signale umgesetzt werden, die ihrerseits auf einem kartesischen Zweikoordinatendiagramm abgebildet werden.

Die betreffenden Maschinen sind beispielsweise Werkzeugmaschinen von hoher Präzision, insbesondere numerisch gesteuerte Werkzeugmaschinen beispielsweise zum Fräsen, Elektroerodieren und dergleichen, oder auch Roboter sowie Messmaschinen zum Ausmessen von Werkzeugen und Werkstücken mit hoher Präzision.

Werkzeugmaschinen werden vor ihrer ersten Inbetriebnahme und in periodischen Zeitabständen danach mittels normierter, d.h. in Form von Mess- und Prüfvorschriften festgelegter Messverfahren unter anderem auf ihre geometrische Genauigkeit geprüft. Es sei in diesem Zusammenhang beispielsweise auf die Deutsche Industrie-Vornorm DIN 8601 oder auf die Richtlinie Nr. 3441 des Vereins Deutscher Ingenieure (VDI) und der Deutschen Gesellschaft für Qualität (DGQ) hingewiesen. Als Vorschriften auf diesem Gebiet sind ausserdem die amerikanischen Normen für Flug- und Weltraumindustrie (National Aerospace Standard) NAS 985 und NAS 979 bekannt. Der Vollständigkeit halber sei noch auf die Normen der International Organization for Standardization ISO 230-1 und ISO 230-2 sowie auf den Normentwurf (Draft International Standard) ISO/DIS 3070/0 hingewiesen.

Zur Durchführung solcher Prüfungen ist beispielsweise aus EP-0106181 oder US-4662074 bekannt, die Abweichung der Kreisbewegung eines Maschinenteils von einem durch ein Kreisnormal von kreisförmigen Querschnitt verkörperten idealen Kreis zu messen.

Dabei wird diese Kreisbewegung durch Translation des Maschinenteils entlang zwei Translationsachsen zum Beschreiben einer Kreisbahn um ein Zentrum dieser Kreisbahn ohne Rotation relativ zum Maschinenbett erzeugt. Die Translationsachsen definieren eine im wesentlichen rechtwinklig zur Achse des Kreisnormals liegende Bewegungsebene, in welcher die Kreisbahn liegt. Am genannten Maschinenteil wird ein Abtaster angeordnet, der in der Bewegungsebene einen kreisförmigen Querschnitt mit einem Zentrum aufweist und stets in zwei zur Bewegungsebene parallelen Messrichtungen zugleich empfindlich ist. An einem anderen Maschinenteil wird das Kreisnormal so angeordnet, dass der kreisförmige Querschnitt seiner Aussenfläche in der Bewegungsebene liegt und eine Antastfläche für den Abtaster bildet. Vor der Messung wird der Abtaster relativ zur Antastfläche so angeordnet und daran angedrückt, dass er in der Bewegungsebene eine Soll-Auslenkung erfährt. Die auf die Messrichtungen projizierten Auslenkungen des Abtasters werden in elektrische Signale umgesetzt, die ihrerseits auf einem kartesischen Zweikoordinatendiagramm abgebildet werden.

Die aus EP-0106181 oder US-4662074 bekannte Lehre hat jedoch überhaupt nicht die Aufgabe erkannt, die Abweichung der Kreisbewegung des genannten Maschinenteils gegenüber einer Drehbewegung eines anderen Teils derselben Maschine zu messen, welche Drehbewegung relativ zum Maschinenbett durch Rotation des genannten anderen Maschinenteils um eine Drehachse erzeugt wird.

Um diese Aufgabe zu lösen wäre es bei Verwendung der aus EP-0106181 oder US-4662074 bekannten Lehre nötig, das Normal genau auf die genannte Drehachse zu zentrieren und dann schrittweise um diese Drehachse zu drehen, wobei nach jedem erfolgten Drehschritt das aus EP-0106181 oder US-4662074 bekannte Verfahren erneut durchzuführen wäre. Andere Vorgehens-weisen können ausgedacht werden, aber alle diese Vorgehensweisen wären äusserst aufwendig, unter anderem wegen der zeitraubenden Wiederholung des Verfahrens nach jedem Drehschritt und der erforderlichen Genauigkeit bei der Ausrichtung des Normals auf der Drehachse. Ausserdem stellt ein solches Vorgehen naturgemäss keine kontinuierliche Messung dar, was an sich eine Fehlerquelle ist.

Aus Seite 161 der Veröffentlichung "Der Kreisformtest" von W.Knapp und S.Hrovat (1986, Eigenverlag S.Hrovat, Trottenstrasse 79, CH-8037 Zürich) ist eine Weiterbildung des Verfahrens nach EP-0106181 oder US-4662074 bekannt, die den Zweck verfolgt, einen zweidimensionaler Abtaster zu kontrol lieren. Dazu wird der Abtaster konzentrisch zur Achse eines Rundtisches aber nicht auf diesen montiert. Auf dem Rundtisch wird eine Antastfläche exzentrisch montiert, derart, dass der Abtaster ausgelenkt wird. Danach wird der Rundtisch samt der Antastfläche gedreht und ein Test nach EP-0106181 oder US-4662074 simuliert: aus den Abweichungen der Aufzeichnung von der Kreisform lassen sich verschiedene Eigenschaften und Fehler des zweidimensionalen Abtaster ableiten. Aus dieser bekannten Vorgehensweise ergibt sich keinerlei Hinweis auf ein Vorgehen zur Messung der Abweichung zwischen Bewegungen einer Maschine, die um eine Drehachse und mit zwei Translationsachsen erzeugt werden.

Aufgabe der Erfindung ist es, ein Verfahren der eingangs genannten Art aufzuzeigen, mit welchem die Messung der Abweichung zwischen Bewegungen einer Maschine um eine Drehachse und um zwei Translationsachsen kontinuierlich, schnell, einfach und kostengünstig erfolgt, und mit welchem die Fehlermöglichkeiten bei der Messung vermindert und somit die Sicherheit der Resultate erhöht werden.

Diese Aufgabe wird erfindungsgemäss dadurch gelöst, dass bei einem Verfahren der eingangs genannten Art

- der Abtaster ausserhalb der Drehachse und davon um mehr als den Betrag der Soll-Auslenkung versetzt angeordnet wird,
- das Zentrum der Kreisbahn im wesentlichen auf der Drehachse angeordnet wird,
- während der Messung die Drehbewegung und die Kreisbewegung so aufeinander abgestimmt werden, dass das Zentrum des Abtasters unter Vorgabe einer Konstanthaltung der Grösse der Soll-Auslenkung eine Hilfsbewegung im wesentlichen entlang einer zur Kreisbahn konzentrischen Hilfskreisbahn ausführt, und
- Abweichungen der Ist-Auslenkung von der Soll-Auslenkung erkennbar und gegebenenfalls messbar dargestellt werden, um der Bestimmung von Abweichungen zwischen den Drehbewegungen und den Kreisbewegungen der Maschine zu dienen.

Vorteilhafte Weiterbildungen des Verfahrens sowie Anwendungen davon ergeben sich aus den abhängigen Ansprüchen.

Bei Uebereinstimmung der Drehbewegung und der Kreisbewegung ergibt sich im Zweikoordinatendiagramm aufgrund der konstant gleich der Soll-Auslenkung bleibenden Ist-Auslenkung des Abtasters die Aufzeichnung eines dieser Auslenkung entsprechenden Kreisbogens. Eine gegebenenfalls auftretende Abweichung der Drehbewegung von der Kreisbewegung erzeugt eine von der Soll-Auslenkung abweichende Ist-Auslenkung des Abtasters, die im Zweikoordinatendiagramm als von einem Kreisbogen abweichende Aufzeichnung abgebildet wird.

Der Unterschied zwischen den Ergebnissen von Messungen mit verschiedenen Abständen des Zentrums des Abtasters zur Drehachse besteht im wesentlichen darin, dass sich gegebenenfalls auftretende Winkelpositionsfehler der Drehachse verschieden auswirken, weil sich am Abtaster verschiedene Hebel-arme auswirken. Daraus leitet sich die Möglichkeit ab, durch Subtrahieren der Ergebnisse solcher Messungen voneinander die gegebenenfalls auftretenden Winkelpositionsfehler der Drehachse und Fehler der Tranlationsachsen voneinander zu unterscheiden und zu messen.

In einer bevorzugten Ausbildung kann die Antastfläche aus einer einzigen Ebene bestehen. Ihrerseits kann diese Ebene entweder im wesentlichen rechtwinklig oder im wesentlichen parallel oder noch im wesentlichen in einem Winkel von 45° zu einem von der Drehachse zum Zentrum des Abtasters geführten Radius und dabei parallel zur Drehachse angeordnet werden.

In einer anderen bevorzugten Ausbildung kann die Antastfläche aus zwei Ebenen bestehen, die zusammen einen Flächenwinkel bilden, der im wesentlichen rechtwinklig sein kann. Die winkelteilende Ebene des Flächenwinkels kann entweder im wesentlichen rechtwinklig oder im wesentlichen parallel oder noch im wesentlichen in einem Winkel von 45° zu einem von der Drehachse zum Zentrum des Abtasters geführten Radius angeordnet werden, wobei die Schnittlinie der Ebenen im wesentlichen parallel zur Drehachse angeordnet wird.

Wenn, wie nachstehend im Zusammenhang mit den Figuren beschrieben wird, eine Ebene der Antastfläche im wesentlichen rechtwinklig zu einem von der Drehachse zum Zentrum des Abtasters geführten Radius angeordnet ist, so erlaubt diese Ebene, gegebenenfalls auftretende Radialbewegungen der Antastfläche relativ zum Abtaster zu erfassen. Ist eine Ebene der Antastfläche im wesentlichen parallel zu einem von der Drehachse zum Zentrum des Abtasters geführten Radius angeordnet, so erlaubt diese Ebene, gegebenenfalls auftretende Winkelpositionsänderungen der Antastfläche relativ zum Abtaster zu erfassen. Ist eine Ebene der Antastfläche im wesentlichen in einem Winkel von 45° zu einem von der Drehachse zum Zentrum des Abtasters geführten Radius angeordnet, so erlaubt diese Ebene, gegebenenfalls auftretende Radialbewegungen und Winkelpositionsänderungen der Antastfläche relativ zum Abtaster in Kombination miteinander zu erfassen.

Weist die Antastfläche zwei Ebenen auf, wobei deren winkelteilende Ebene im wesentlichen in einem Winkel von 45° zu einem von der Drehachse zum Zentrum des Abtasters geführten Radius angeordnet ist, so erlaubt eine solche Anordnung, gleichzeitig gegebenenfalls auftretende Radialbewegungen und/oder Taumelbewegungen und/oder Winkelpositionsfehler der Drehachse und eine gegebenenfalls auftretende Abweichung der Bewegung von einer perfekten Kreisbahn festzustellen. Da alle diese Fehlerquellen Verzerrungen des aufgezeichneten Kreisbogens bewirken, ist mit einer einzigen Messung überprüfbar, ob im Zweikoordinatendiagramm ein Kreisbogen aufgezeichnet wird und somit keiner der erwähnten Fehler vorhanden ist bzw. eine zulässige Grösse überschreitet. In anderen Worten, eine einzige schnelle Messung erlaubt zu überprüfen, dass die Präzision der gemessenen Maschine innerhalb der dafür zugelassenen Toleranzgrenzen liegt.

Im nachfolgenden werden Ausbildungsbeispiele der Erfindung anhand der Zeichnung erläutert.

Fig. 1     zeigt eine perspektivische Ansicht einer Maschine, auf der das erfindungsgemässe Verfahren durchgeführt wird;

Fig. 2     bis 7 zeigen schematisch die Positionen und Bahnen einschlägiger Objekte in der Bewegungsebene der Maschine während der Durchführung des erfindungsgemässen Verfahrens auf verschiedene Weisen; und

Fig. 8     zeigt eine Aufzeichnung von Messergebnissen, die mit dem erfindungsgemässen Verfahren erhalten wurden.

Nachstehend wird zur Vereinfachung der Beschreibung von unbedeutenden Abweichungen der zu beschreibenden Grössen abgesehen, diesen Abweichungen wird also nicht mehr wie im vorangehenden durch die Qualifizierung "im wesentlichen" Rechnung getragen. Auch werden die Begriffe "horizontal" und "vertikal" zur vereinfachten Darstellung von relativen Lagen verwendet, es ist aber zu verstehen, dass es sich in der gesamten Beschreibung um Beispiele handelt und es erfindungsgemäss nicht auf die absolute Lage im Raum, sondern auf die gegenseitige relative Lage der beschriebenen Objekten ankommt.

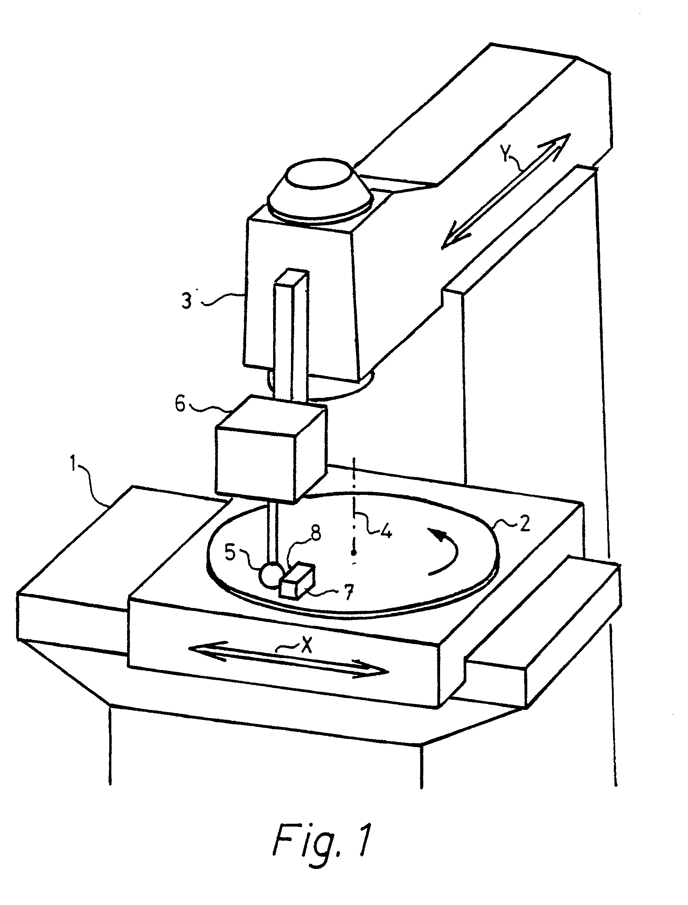

In Fig. 1 ist eine Maschine dargestellt, die auf einem Maschinenbett 1 mit darauf abgestützen vertikalen Maschinenständer einen Werktisch 2 und einen Werkzeughalter 3 aufweist. Der Werktisch 2 ist relativ zum Maschinenbett 1 in einer horizontalen Bewegungsebene XY in Richtung einer Translationsachse X verschiebbar und um eine vertikale Drehachse 4 drehbar. Der Werkzeughalter 3 ist relativ zum Maschinenbett 1 in einer horizontalen Bewegungsebene XY in Richtung einer Translationsachse Y verschiebbar.

Beim Gebrauch der Maschine zum Fräsen wäre ein Fräswerkzeug im Werkzeughalter 3 eingespannt und auf dem Werktisch 2 ein Werkstück aufgespannt.

Zur Durchführung des erfindungsgemässen Verfahrens ist auf dem Werkzeughalter 3 ein Abtaster 5 angeordnet, der im beschriebenen Beispiel kugelförmig ist, beispielsweise aber auch zylindrisch, konisch, abgestuft usw. sein könnte. Hier von Belang ist lediglich, dass der Abtaster 5 in der Bewegungsebene XY einen kreisförmigen Querschnitt aufweist.

Der Abtaster 5 ist am Werkzeughalter 3 über einen Sockel 6 abgestützt, der einen Umsetzer für Auslenkungen des Abtasters 5 umfasst. Dieser Umsetzer ist so ausgebildet, dass er Auslenkungen des Abtasters 5 parallel zu den Translationsachsen X und Y stets erfasst und zugleich in je ein entsprechendes elektrisches Signal umsetzt. Diese elektrischen Signale werden wie in der aus EP-0106181 oder US-4662074 bekannten Lehre entlang den kartesischen Koordinaten eines (nicht dargestellten) XY-Zeichengeräts (Plotter) aufgezeichnet. Somit werden die Auslenkungen des Abtasters in der Aufzeichnungsebene des XY-Zeichengeräts abgebildet. Es ist nicht unerlässlich, jedoch von Vorteil und im beschriebenen Beispiel realisiert, dass die beiden Messrichtungen A und B des Umsetzers mit den Richtungen der beiden Translationsachsen X und Y übereinstimmen: hier von Belang ist lediglich, dass der Abtaster stets und zugleich in zwei zur Bewegungsebene parallelen und rechtwinklig zueinander liegenden Richtungen empfindlich ist, wobei diese Richtungen den kartesischen Koordinaten des XY-Zeichengeräts entsprechen.

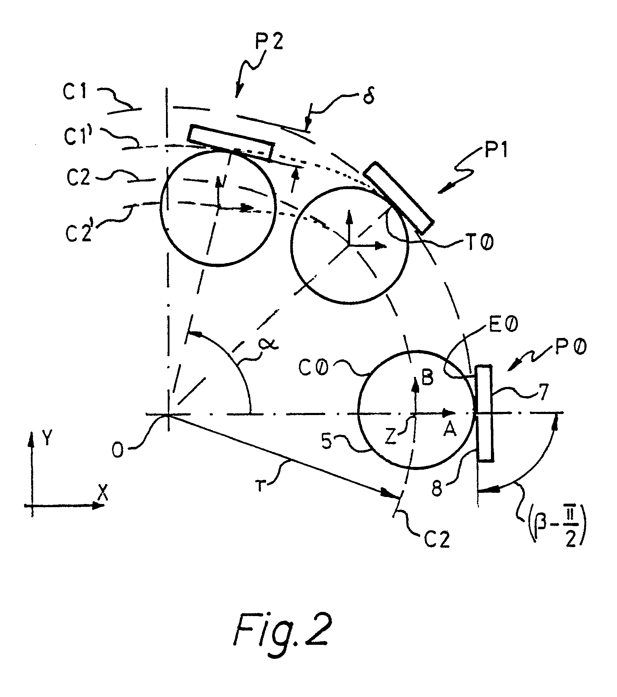

Zur Durchführung des erfindungsgemässen Verfahrens ist ausserdem am Werktisch 2 ein Block 7 angeordnet, an dem eine Antastfläche 8 angeformt ist. Diese Antastfläche 8 kann auf verschiedene Weise ausgebildet sein und relativ zur Drehachse verschiedene Positionen aufweisen, wie es nachstehend unter Bezugnahme auch auf Fig. 2 bis 7 beschrieben wird.

Der Werktisch 2 wird in der Bewegungsebene XY samt dem Block 7 und der daran angeformten Antastfläche 8 um die Drehachse 4 gedreht. Die Kreisbewegung erfolgt durch reine Translationen des Werktisches 2 und des Werkzeughalters 3 entlang den jeweiligen Translationsachsen X und Y, derart, dass der Abtaster 5 eine (nicht in Fig. 1 dargestellte) Kreisbahn um ein Zentrum O beschreibt, das in der Bewegungsebene XY auf der Drehachse 4 liegt. Es erfolgt dabei keine Rotation des Werkzeughalters 3 und somit des Abtasters 5 re lativ zum Maschinenbett 1. Die Steuerung dieser Bewegungen erfolgt auf eine bei Werkzeugmaschinen und insbesondere bei numerisch gesteuerten Werkzeugmaschinen an sich bekannte Weise, die hier keiner weiteren Erklärung bedarf.

In den Fig. 2 bis 7 sind jeweils ein Teil der Bewegungsebene XY der Maschine und die beiden kartesischen Translationsachsen X und Y in der Ebene der Zeichnung dargestellt. Die Drehachse 4 schneidet die Bewegungsebene XY im Zentrum O. In der Bewegungsebene XY ist der kreisförmige Querschnitt des Abtasters 5 als Kreis C0 mit einem Zentrum Z dargestellt. Der Abtaster 5 ist in der Bewegungsebene XY in zwei Messrichtungen A und B empfindlich, von denen je eine einer der kartesischen Translationsachsen X und Y parallel ist. Es werden jeweils drei Positionen P0 bis P2 des Abtasters 5 und der Antastfläche 8 dargestellt, nämlich P0 am Anfang der Messung, P1 während der Messung bei einem Idealfall ohne Abweichung zwischen der Drehbewegung und der Kreisbewegung der Maschine, und P2 während der Messung beim Auftreten von Abweichungen zwischen der Drehbewegung und der Kreisbewegung der Maschine.

In Fig. 2 umfasst die Antastfläche 8 eine einzige vertikale Ebene E0, die rechtwinklig zu einer vom Zentrum O zum Zentrum Z führenden radialen Linie angeordnet ist.

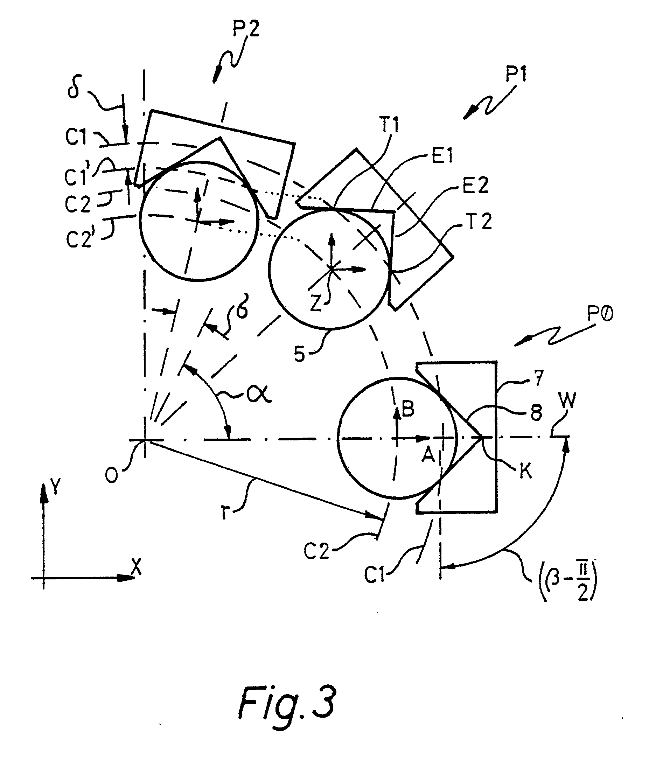

In Fig. 3 umfasst die Antastfläche 8 zwei vertikale Ebenen E1 und E2, die sich auf einer vertikalen Kante K rechtwinklig schneiden und zusammen einen Flächenwinkel E1 ⌃ E2 bilden. Die vom Zentrum O zum Zentrum Z führende radiale Linie liegt in einer winkelteilenden Ebene W des Flächenwinkels E1 ⌃ E2.

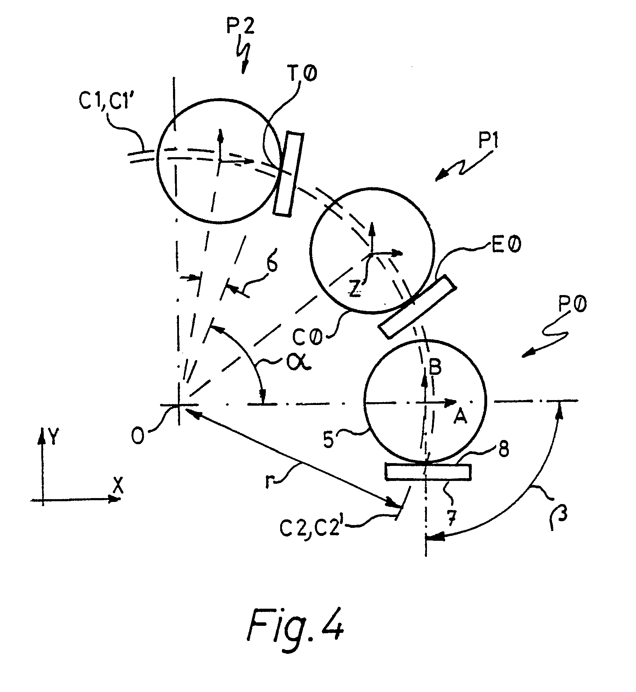

In Fig. 4 umfasst die Antastfläche 8 eine einzige vertikale Ebene E0, die parallel zu einer vom Zentrum O zum Zentrum Z führenden radialen Linie angeordnet ist.

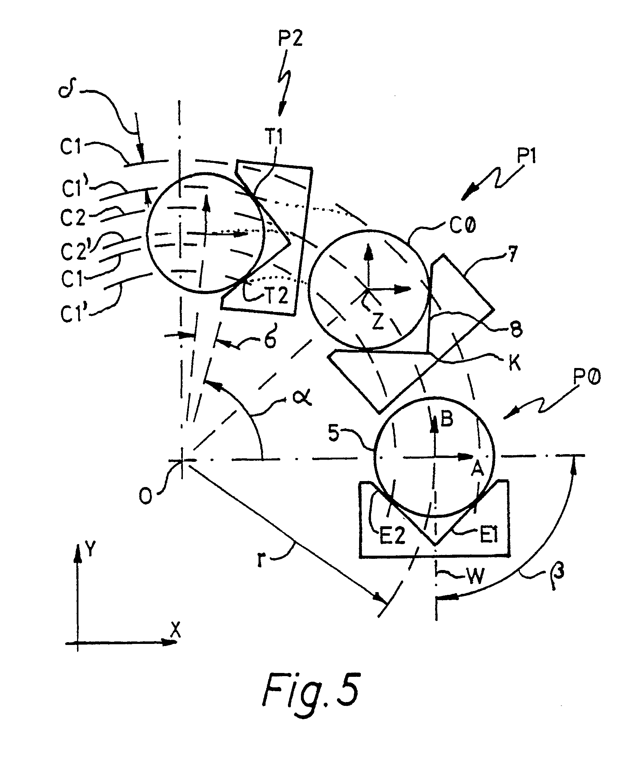

In Fig. 5 umfasst die Antastfläche 8 zwei vertikale Ebenen E1 und E2, die sich auf einer vertikalen Kante K rechtwinklig schneiden und zusammen einen Flächenwinkel E1 ⌃ E2 bilden. Die vom Zentrum O zum Zentrum Z führende radiale Linie schneidet die winkelteilende Ebene W des Flächenwinkels E1 ⌃ E2 rechtwinklig.

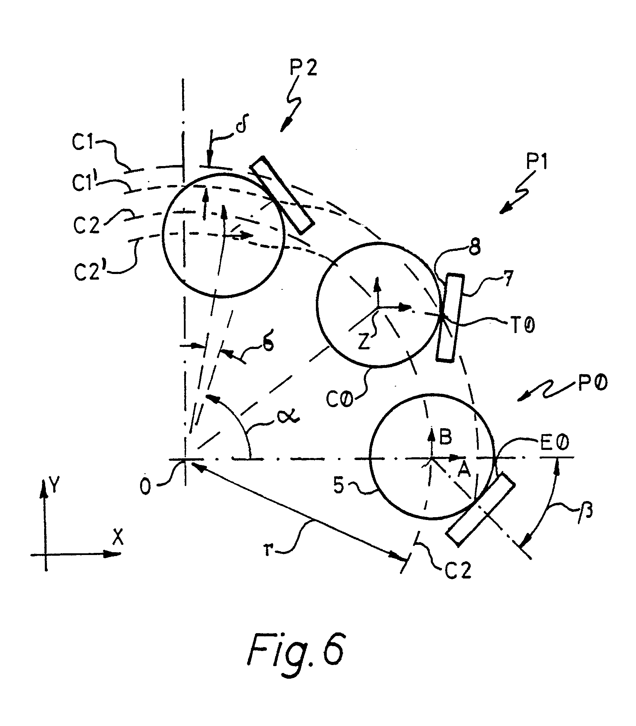

In Fig. 6 umfasst die Antastfläche 8 eine einzige vertikale Ebene E0, die in einem Winkel von 45° zu einer vom Zentrum O zum Zentrum Z führenden radialen Linie angeordnet ist.

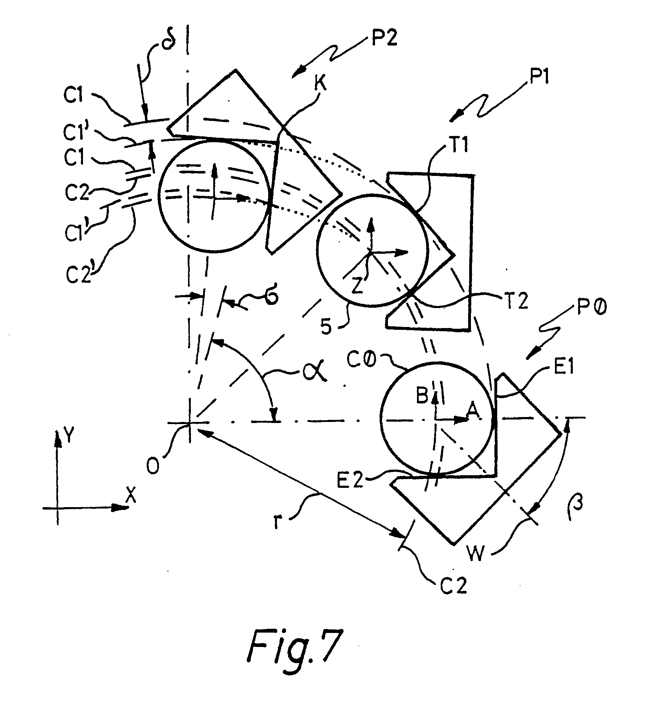

In Fig. 7 umfasst die Antastfläche 8 zwei vertikale Ebenen E1 und E2, die sich auf einer vertikalen Kante K rechtwinklig schneiden und zusammen einen Flächenwinkel E1 ⌃ E2 bilden. Die vom Zentrum O zum Zentrum Z führende radiale Linie schneidet die winkelteilende Ebene W des Flächenwinkels E1 ⌃ E2 in einem Winkel von 45°.

Es ist im nachstehenden generell zu verstehen, dass es bei der Durchführung des erfindungsgemässen Verfahrens auf die relativen Bewegungen des Abtasters 5 und der Antastfläche 8 ankommt. Jede Art von kinematischer Umkehr oder Kombination ist dabei inbegriffen, unter anderem die folgenden Varianten:

In einer ersten, in Fig. 1 dargestellten Variante wird die Antastfläche 8 am Werktisch 2 angeordnet. Der Werktisch 2 wird um die vertikale Drehachse 4 gedreht sowie nur entlang einer der Translationsachsen, beispielsweise in Richtung X, translatorisch bewegt. Der Abtaster 5 wird am Werkzeughalter 3 befestigt und mit ihm relativ zum Maschinenbett 1 entlang der anderen Translationsachse, beispielsweise in Richtung Y, rein translatorisch bewegt.

In einer zweiten, nicht dargestellten Variante wird die Antastfläche 8 am Werktisch 2 angeordnet. Der Werktisch 2 wird um die vertikale Drehachse 4 gedreht sowie entlang den beiden Translationsachsen X und Y translatorisch bewegt. Der Abtaster 5 wird am Werkzeughalter 3 befestigt und nicht bewegt.

In einer dritten, nicht dargestellten Variante wird die Antastfläche 8 am Werktisch 2 angeordnet. Der Werktisch 2 wird um die vertikale Drehachse 4 gedreht. Der Abtaster 5 wird am Werkzeughalter 3 befestigt sowie entlang den beiden Translationsachsen X und Y translatorisch bewegt.

In einer vierten, nicht dargestellten Variante wird der Abtaster 5 samt seinem Sockel 6 am Werktisch 2 angeordnet. Der Werktisch 2 wird um die vertikale Drehachse 4 gedreht sowie nur entlang einer der Translationsachsen, beispielsweise in Richtung X, translatorisch bewegt. Die Antastfläche 8 wird am Werkzeughalter 3 befestigt und mit ihm relativ zum Maschinenbett 1 entlang der anderen Translationsachse, beispielsweise in Richtung Y, rein translatorisch bewegt.

In einer fünften, nicht dargestellten Variante wird der Abtaster 5 am Werktisch 2 angeordnet. Der Werktisch 2 wird um die vertikale Drehachse 4 gedreht sowie entlang den beiden Translationsachsen X und Y translatorisch bewegt. Die Antastfläche 8 wird am Werkzeughalter 3 befestigt und nicht bewegt.

In einer sechsten, nicht dargestellten Variante wird der Abtaster 5 am Werktisch 2 angeordnet. Der Werktisch 2 wird um die vertikale Drehachse 4 gedreht. Die Antastfläche 8 wird am Werkzeughalter 3 befestigt sowie entlang den beiden Translationsachsen X und Y translatorisch bewegt.

Maschinen mit einem Werktisch und einem Werkzeughalter, die unabhängig voneinander beweglich sind, sind beim Stand der Technik bekannt und brauchen hier nicht näher beschrieben zu werden.

Vor Anfang der Messung (Position P0 in Fig. 2 bis 7) werden der Abtaster 5 und die Antastfläche 8 so zueinander angeordnet, dass die Antastfläche 8 auf den Abtaster 5 in der Bewegungsebene XY an einem Kontaktpunkt T0 bzw. an zwei Kontaktpunkten T1 und T2 angedrückt wird, derart, dass die Antastfläche 8 den Abtaster 5 in Richtung seines Zentrums Z versetzt und ihm dadurch eine Soll-Auslenkung erteilt. Diese Soll-Auslenkung beträgt die jeweiligen Werte a und b in den Messrichtungen A und B. Richtung und Grösse der Soll-Auslenkung werden von der eingestellten Position und Winkellage des Blocks 7 mit der Antastfläche 8 in bezug auf den Werkzeughalter 3 bzw. die Drehachse 4 bestimmt.

Während der Durchführung der Messung wird der Abtaster 5 relativ zur Drehachse 4 entlang den beiden Translationsachsen X und Y rein translatorisch bewegt, so dass der Abtaster 5 eine Bahn beschreibt, die im (fehlerfreien) Idealfall ein entsprechender Kreis ist und beim Auftreten von Fehlern der Maschine von diesem Kreis abweicht.

Gleichzeitig wird der Block 7 mit der Antastfläche 8 um die Drehachse 4 gedreht, so dass die Ebene E0 bzw. die Ebenen E1 und E2 im Idealfall um das Zentrum O drehen und deren Lage beim Auftreten von Fehlern der Maschine von der einer idealen Rotation entsprechenden Lage durch radiale und/oder tangentiale Versetzungen abweicht. In anderen Worten, die Soll-Auslenkung wird um die Drehachse 4 gedreht und die Ist-Auslenkung erfährt im Idealfall genau die gleiche Drehung, während sie beim Auftreten von Fehlern der Maschine von der Soll-Auslenkung abweicht.

Die Umlaufgeschwindigkeit auf der Kreisbahn wird erfindungsgemäss auf solche Weise mit der Drehgeschwindigkeit um die Drehachse 4 abgestimmt, dass die Bogengeschwindigkeit des Umlaufs und die Winkelgeschwindigkeit der Drehung im Ideal-fall übereinstimmen.

Unter diesen Voraussetzungen bleibt die Grösse der Auslenkung, also ihr Absolutwert $(a^2+b^2)^{\frac{1}{2}}$, im Idealfall konstant, d.h. das erfindungsgemässe Verfahren wird so durchgeführt, dass die Grösse bzw. der Absolutwert der Soll-Auslenkung konstant gehalten wird.

Dabei beschreiben der Kontaktpunkt T0 bzw. die Kontaktpunkte T1 und T2 während der Durchführung der Messung eine jeweilige Bahn C1', die im Idealfall ein um das Zentrum O zentrierter Kreis C1 ist. Gleichzeitig führt das Zentrum Z des Abtasters 5 eine Hilfsbewegung aus, bei der das Zentrum Z des Abtasters 5 eine zur Bahn C1' equidistante Hilfsbahn C2' beschreibt. Die Hilfsbahn C2' ist im Idealfall ein um das Zentrum O zentrierter Hilfskreis C2. Beim Auftreten von Fehlern der Maschine können, je nach den Fehlerarten und der verwendeten Messvariante, sowohl die Bahn C1' wie die Hilfsbahn C2' von der Kreisform abweichen oder nicht.

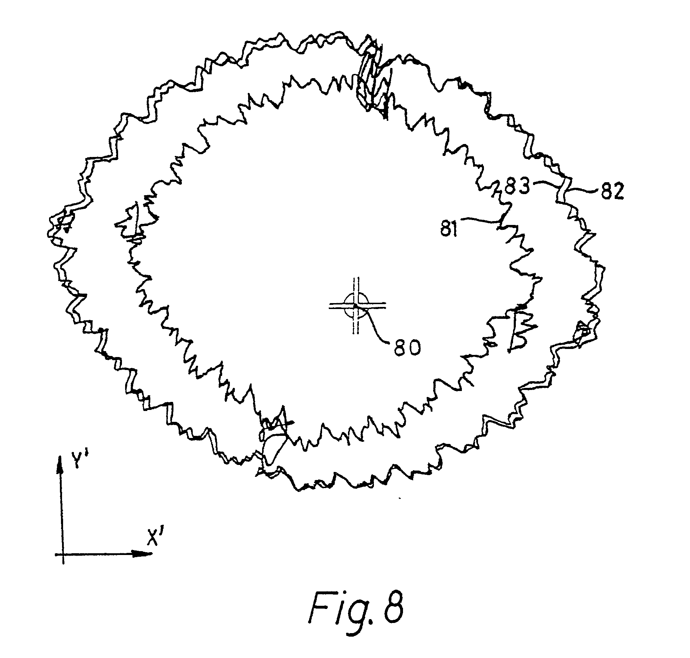

Fehler der Maschine bewirken im allgemeinen eine Abweichung der momentanen Ist-Auslenkung des Abtasters 5 von der momentanen Soll-Auslenkung, die sich von der am Anfang der Messung eingestellten Soll-Auslenkung durch Drehung ableitet. Die momentane Ist-Auslenkung des Abtasters 5 beträgt die jeweiligen Werte a' und b' in den Messrichtungen A und B. Nach Umsetzung in elektrische Signale werden diese Werte a' und b' in einer Aufzeichnungsebene X'Y' des XY-Zeichengeräts (vgl. Fig. 8) in einem kartesischen Zweikoordinatendiagramm mit Koordinatenachsen X' und Y' proportional abgebildet. Der entsprechende Proportionalitätsfaktor wird im nachstehenden nicht weiter berücksichtigt. Da die momentane Ist-Auslenkung im Idealfall eine konstante Grösse behält und sich daher aus der anfänglichen Soll-Auslenkung durch Drehung ergibt, wird im Idealfall eine Kreisform (Kreis oder Kreisbogen) auf dem XY-Zeichengerät aufgezeichnet. Abweichungen zwischen den Drehbewegungen und den Kreisbewegungen der Maschine bewirken Deformationen des aufgezeichneten Kreises oder Kreisbogens, die zur Bestimmung der betreffenden Abweichungen auswertbar sind. Ein Beispiel einer so erhaltenen Aufzeichnung ist in Fig. 8 angegeben und wird weiter unten näher beschrieben.

In den Fig. 2 bis 7 ist jeweils das Zentrum Z des Abtasters 5 ausserhalb der Drehachse 4 angeordnet.

Das Zentrum Z des Abtasters 5 kann aber in dessen anfänglicher Ruhestellung, bevor die Antastfläche 8 daran angedrückt wird, auch genau auf der Drehachse 4 angeordnet sein. Nach dem Andrücken der Antastfläche 8 ist dann das Zentrum Z des Abtasters 5 in bezug auf die Drehachse 4 um den Betrag der Soll-Auslenkung versetzt angeordnet. Somit erfolgt die Kreisbewegung des Zentrums Z mit einem Radius gleich der Soll-Auslenkung, und es ergibt sich eine jeweilige Variante zu den Fig. 2 bis 7, die im Zusammenhang mit diesen Figuren diskutiert wird.

Ferner werden im nachstehenden und/oder in den Fig. 2 bis 7 folgende Bezeichnungen verwendet:

a,b     bezeichnen die Komponenten der momentanen Soll-Auslenkung des Abtasters 5 in den jeweiligen Messrichtungen A und B.

a',b'     bezeichnen die Komponenten der momentanen Ist-Auslenkung des Abtasters 5 in den jeweiligen Messrichtungen A und B.

$\alpha$     bezeichnet den momentanen Winkel, der vom Zentrum O aus gesehen die momentane Richtung der vom Zentrum O zum Zentrum Z führenden radialen Linie bezeichnet, wobei die Referenz für $\alpha = 0$ auf die Richtung der Translationsachse X (und der Messrichtung A) gelegt wird.

$\beta$     bezeichnet die Richtung der Soll-Auslenkung in bezug auf die momentane Richtung der vom Zentrum O zum Zentrum Z führenden radialen Linie, wobei die Referenz für $\beta = 0$ auf die Richtung zum Zentrum O hin gelegt wird.

r     bezeichnet den Radius des Hilfskreises C2, der im Idealfall von Zentrum Z um das Zentrum O beschrieben wird.

$\delta$     bezeichnet die Abweichung der momentanen Ist-Auslenkung von der momentanen Soll-Auslenkung beim momentanen Wert des Winkels $\alpha$ in Richtung radial zum Hilfskreis C2 ("radiale Abweichung", positiv in Richtung der Soll-Auslenkung, im Idealfall gilt $\delta = 0$).

$\sigma$     bezeichnet die Abweichung der momentanen Ist-Auslenkung von der momentanen Soll-Auslenkung beim momentanen Wert des Winkels $\alpha$ in Richtung tangential zum Hilfskreis C2, ausgedrückt als Winkelwert im Zentrum O ("Winkelpositionsabweichung", positiv in Richtung des wachsenden Winkels $\alpha$, im Idealfall gilt $\sigma = 0$).

d     bezeichnet die Grösse (d.h. den Absolutwert) der dem Abtaster 5 vor Anfang der Messung erteilten Soll-Aus lenkung:
$$d = (a^2 + b^2)^{\frac{1}{2}}$$

Zur Vereinfachung der Erläuterung wird angenommen, dass zum Zeitpunkt des Anfangs der Messung $\alpha = 0$ gilt.

Auch ist zu bemerken, dass aufgrund der geometrischen Verhältnisse $\sigma$ in Fig. 2 und $\delta$ in Fig. 4 gleich Null gesetzt werden können und deshalb nicht sichtbar sind. Ausserdem ist d in keiner der Fig. 2 bis 7 sichtbar, weil sich d nur im Sockel 6 des Abtasters 5 auswirkt.

Bei einer Durchführung der Messung nach den Fig. 2, 4 und 6 ergibt sich aus der jeweils verwendeten Anordnung des Abtasters 5 und der Antastfläche 8 mit nur einer Ebene E0, dass die momentane Soll-Auslenkung
$$-a = d.\cos(\alpha - \beta)$$
$$-b = d.\sin(\alpha - \beta)$$
beträgt, während die momentane Ist-Auslenkung (vorausgesetzt $\delta \ll r$ und $\sigma \ll 1$)

$$-a' = (d + \delta).\cos\alpha.\cos\beta + (d + \sigma.r).\sin\alpha.\sin\beta$$
$$-b' = (d + \delta).\sin\alpha.\cos\beta - (d + \sigma.r).\cos\alpha.\sin\beta$$
beträgt.

Im Falle der Fig. 2 gilt $\beta = 0°$: die Winkelpositionsabweichung $\sigma$ wirkt sich nicht aus, während der gegebenenfalls mit $\alpha$ variierende Wert der radialen Abweichung $\delta$ auf dem XY-Zeichengerät eine Abweichung der aufgezeichneten Kurve [-(d + $\delta$).cos$\alpha$,(d + $\delta$).sin$\alpha$]vom idealen Kreis bzw. Kreisbogen [d.cos$\alpha$,d.sin$\alpha$]bewirkt.

Im Falle der Fig. 4 gilt $\beta = 90°$: die radiale Abweichung $\delta$ wirkt sich nicht aus, während der gegebenenfalls mit $\alpha$ variierende Wert der Winkelpositionsabweichung $\sigma$ auf dem XY-Zeichengerät eine Abweichung der aufgezeichneten Kurve [-(d + $\sigma$.r).sin$\alpha$,-(d + $\sigma$.r).cos$\alpha$]vom idealen Kreis bzw. Kreisbogen [d.sin$\alpha$,-d.cos$\alpha$]bewirkt. Diese Relation zwischen der Winkelpositionsabweichung $\sigma$ und der aufgezeichneten Kurve [(d + $\sigma$.r).sin$\alpha$,-(d + $\sigma$.r).cos$\alpha$]- ist eine Radial/Tangential-Transformation, die ohne Zuhilfenahme eines Rechners erfolgt und deshalb bemerkenswert ist.

Im Falle der Fig. 6 gilt $\beta = 45°$: die gegebenenfalls mit $\alpha$ variierenden Werte der radialen Abweichung $\delta$ und der Winkelpositionsabweichung $\sigma$ bewirken beide auf dem XY-Zeichengerät eine Abweichung der aufgezeichneten Kurve [a',b'] vom idealen Kreis bzw. Kreisbogen [d/$\sqrt{2}$.(sin$\alpha$ + cos$\alpha$)-,d/$\sqrt{2}$.(sin$\alpha$-cos$\alpha$)].

Bei einer Durchführung der Messung nach den Fig. 3, 5 und 7 ergibt sich aus der jeweils verwendeten Anordnung des Abtasters 5 und der Antastfläche 8 mit den beiden Ebenen E1 und E2, dass die momentane Soll-Auslenkung wie im Falle der Fig. 2, 4 und 6

$$-a = d.\cos(\alpha - \beta)$$

$$-b = d.\sin(\alpha - \beta)$$
beträgt, während im Unterschied zum Falle der Fig. 2, 4 und 6 die momentane Ist-Auslenkung (vorausgesetzt $\delta \ll r$ und $\sigma \ll 1$) nun
$$-a' = [(d + \delta).\cos\alpha + \sigma.r.\sin\alpha].\cos\beta + [(d + \sigma.r)-.\sin\alpha + \delta.\cos\alpha].\sin\beta$$
$$-b' = [(d + \delta).\sin\alpha - \sigma.r.\cos\alpha].\cos\beta - [(d + \sigma.r).\cos\alpha-\delta.\sin\alpha].\sin\beta$$
beträgt.

Im Falle der Fig. 3 gilt $\beta = 0°$: die gegebenenfalls mit $\alpha$ variierenden Werte der radialen Abweichung $\delta$ und der Winkelpositionsabweichung $\sigma$ bewirken beide auf dem XY-Zeichengerät eine Abweichung der aufgezeichneten Kurve $[(d + \delta).\cos\alpha + \sigma.r.\sin\alpha, (d + \delta).\sin\alpha - \sigma.r.\cos\alpha]$ vom idealen Kreis bzw. Kreisbogen $[d.\cos\alpha, d.\sin\alpha]$.

Im Falle der Fig. 5 gilt $\beta = 90°$: die gegebenenfalls mit $\alpha$ variierenden Werte der radialen Abweichung $\delta$ und der Winkel-positionsabweichung $\sigma$ bewirken beide auf dem XY-Zeichengerät eine Abweichung der aufgezeichneten Kurve $[(d + \sigma.r).\sin\alpha + \delta.\cos\alpha, -(d + \sigma.r).\cos\alpha + \delta.\sin\alpha]$ vom idealen Kreis bzw. Kreisbogen $[d.\sin\alpha, -d.\cos\alpha]$.

Im Falle der Fig. 7 gilt $\beta = 45°$: die gegebenenfalls mit $\alpha$ variierenden Werte der radialen Abweichung $\delta$ und der Winkelpositionsabweichung $\sigma$ bewirken beide auf dem XY-Zeichengerät eine Abweichung der aufgezeichneten Kurve $[a', b']$ vom idealen Kreis bzw. Kreisbogen $[d/\sqrt{2}.(\sin\alpha + \cos\alpha), d/\sqrt{2}.(\sin\alpha - \cos\alpha)]$.

Ist das Zentrum Z des Abtasters 5 in bezug auf die Drehachse 4 um den Betrag der Soll-Auslenkung versetzt angeordnet worden, so gilt $r = d$, was sich aber in den Fällen der Fig. 2 bis 7 nicht auf bemerkenswerte Weise auswirkt.

Es ist ersichtlich, dass man durch geeignete Kombinationen der angegebenen Gleichungen die Werte $\sigma$ und $\delta$ erhalten kann. Folglich lassen sich die radiale Abweichung $\delta$ und die Winkelpositionsabweichung $\sigma$ voneinander unterscheiden und messen, indem man das erfindungsgemässe Verfahren in verschiedenen den Fig. 2 bis 7 entsprechenden Fällen durchführt und dann die auf dem XY-Zeichengerät erhaltenen Aufzeichnungen miteinander vergleicht und anhand der angegebenen Gleichungen auswertet.

Es ist zu bemerken, dass die Auswirkungen von radialen Abweichungen und/oder Taumelbewegungen einer Drehachse vom Radius unabhängig sind. Daher werden radiale Abweichungen und/oder Taumelbewegungen mit Vorteil auf folgende Weise bestimmt:

- Bei einer ersten Messung wird ein Aufbau analog Fig. 2 gewählt, wobei der Radius der Kreisbahn C1 des Kontaktpunktes T0 gleich dem Radius des Abtasters 5 (d.h. dem Radius des Kreises C0) minus der Soll-Auslenkung d vorgegeben wird. Somit wird das Zentrum Z des Abtasters 5 in seiner Ruhelage vor dem Andrücken der Antastfläche 8 genau auf der Drehachse 4 bzw. im Zentrum O angeordnet, nach dem Andrücken der Antastfläche 8 liegt das Zentrum Z des Abtasters 5 um den Betrag der Soll-Auslenkung d von der Drehachse 4 entfernt.

- Danach wird bei einer zweiten Messung der Aufbau nach Fig. 2 gewählt, bei welchem der Radius der Kreisbahn C1 des Kontaktpunktes T0 wie dargestellt deutlich grösser ist als der Radius des Abtasters 5, d.h. als der Radius des Kreises C0. Diese zweite Messung zeigt zusätzlich zur den radialen Abweichungen und/oder Taumelbewegungen der Drehachse 4 auch noch die Auswirkungen der Translationsachsen X und Y.

- Zur Feststellung der Abweichungen allein der Translationsachsen X und Y können die in der ersten Messung erhaltenen Abweichungen von den in der zweiten Messung erhaltenen Abweichungen abgezogen werden.

Somit können Auswirkungen von radialen Abweichungen und/oder Taumelbewegungen einer Drehachse von Auswirkungen der Translationsachsen getrennt werden.

Des weiteren ist zu bemerken, dass durch eine Messung mit einem Aufbau nach Fig. 4 zusätzlich die Auswirkungen von Winkelpositionsabweichungen einer Drehachse kontinuierlich erfasst werden. Da die Auswirkungen von radialen Abweichungen und/oder Taumelbewegungen der Drehachse aus den eben beschriebenen Messungen bekannt sind, können ihre Auswirkungen auf die Messung mit dem Aufbau nach Fig. 4 berechnet und somit in Abzug gebracht werden. Auf diese Weise können Winkelpositionsabweichungen einer Drehachse von radialen Abweichungen und/oder Taumelbewegungen der Drehachse getrennt werden.

Ausserdem ist zu bemerken, dass der Aufbau beispielsweise nach Fig. 2 so geändert werden kann, dass die Antastebene E0 nicht parallel zur Drehachse 4 ist. Dadurch wirken sich zusätzlich Axialbewegungen der Drehachse 4 und/oder Abweichungen der Translationsachsen X und Y in Richtung parallel zur Drehachse 4 aus. Die entsprechenden, den Axialbewegungen der Drehachse zugeordneten Abweichungen können ausgewertet werden, indem Messungen bei verschiedenen Durchmessern der Kreisbahn C1 durchgeführt und miteinander verglichen werden.

Es lässt sich leicht feststellen, dass bei Messungen mit einem Aufbau nach Fig. 3 oder 5 die Auswirkungen von Abweichungen in radialer und tangentialer Richtung gleichzeitig erfassbar sind und bei entsprechender Auswertung (analog der oben beschriebenen Auswertung) voneinander getrennt und analysiert werden können.

Messungen mit einem Aufbau nach Fig. 6 oder 7 oder noch mit einem umgekehrten Aufbau, bei welchem der Abtaster die Drehbewegung und die Antastfläche die Kreisbewegung ausführt, erlauben eine gleichzeitige Kontrolle bezüglich sämtlicher Abweichungen der Drehachse 4 und der Translationsachsen X und Y in der Messebene XY. Zeigt die Aufzeichnung auf dem XY-Zeichengerät bei einem dieser Aufbauten einen Kreis, lässt dies auf vernachlässigbare Abweichungen der Drehachse und der Translationsachsen in dieser Messebene schliessen.

Eine sehr wichtige Folge dieser Bemerkungen und Feststellungen sowie ein bedeutender Vorteil des erfindungsgemässen Verfahrens besteht darin, dass durch einfache Aenderungen der Lage der Antastfläche entweder Abweichungen voneinander getrennt oder alle Abweichungen gesamthaft kontrolliert werden können, wobei letzteres einer Kontrolle der Toleranzen der Maschine gleichkommt.

Ein anderer bedeutender Vorteil des erfindungsgemässen Verfahrens besteht darin, dass bei Durchführung von Messungen mit Aufbauten nach Fig. 2, 4 und 6 alle zur Analyse der Fehlerquellen benötigten Messungen mit einem einzigen Block 7 und einer daran als einzige Ebene E0 angeformten Antastfläche 8 durchführbar sind, indem dieser Block 7 bzw. die Ebene E0 nacheinander in verschiedenen Winkeln, beispielsweise im Winkel von $0°$, $90°$ und $45°$ zur Richtung vom Zentrum Z zum Zentrum O gerichtet werden. Von besonderem Vorteil ist, dass ein solcher Block 7 mit einer einzigen daran angeformten Ebene E0 leicht und kostengünstig herstellbar ist.

Eine Aufzeichnung von Messergebnissen, die mit dem erfindungsgemässen Verfahren und einem Aufbau nach Fig. 2 erhalten wurden, ergibt Informationen bezüglich der radialen Abweichungen und/oder Taumelbewegungen der Drehachse und/oder der Abweichungen der Translationsachsen. Eine derartige Aufzeichnung weist Abweichungen der Kreisform auf, wie sie beispielsweise in Fig. 4 von EP-0106181 oder US-4662074 dargestellt worden sind. Solche Abweichungen der Kreisform umfassen im allgemeinen Ellipsensegmente mit zufälligen höherfrequenten Ueberlagerungen, da radiale Abweichungen einer Drehachse im allgemeinen vergleichsweise klein sind.

Die in Fig. 8 gezeigte Aufzeichnung von Messergebnissen wurde mit dem erfindungsgemässen Verfahren und einem Aufbau nach Fig. 5 erhalten. In dieser Aufzeichnung wirken sich da-her Winkelpositionsabweichungen aus, die als höherfrequente Abweichungen der Kreisform, die sich im dargestellten Beispiel dreissigmal wiederholen, auftreten. Der mit 80 bezeichneter Punkt markiert die Lage des nicht ausgelenkten Abtasters 5 und dient zur Bestimmung der Soll-Auslenkung. Die innere Kennlinie 81 ist bei einer Umlaufgeschwindigkeit von 500 mm/min auf der Kreisbahn, die äusseren Kennlinien 82 und 83 bei einer Umlaufgeschwindigkeit von 2000 mm/min auf der Kreisbahn aufgezeichnet worden. Wenn die Drehbewegung und die Kreisbewegung relativ zueinander mit einer zeitlichen Verschiebung erfolgen und diese von der Geschwindigkeit abhängig ist, führt dies zu dem in Fig. 8 feststellbaren Durchmesser-unterschied. Die beiden Kennlinien 82 und 83 zeigen den Grad der Wiederholbarkeit der Maschine und der Messeinrichtung. Dabei entspricht 1 mm auf dem Bild der Fig. 8 etwa 1 $\mu$m auf der Maschine.

Die Erfindung ist nicht auf die vorangehend beschriebenen und in der Zeichnung dargestellten Varianten beschränkt. Es ist dem Fachmann erkennbar, dass es eine Vielfalt von Weiterbildungsvarianten des erfindungsgemässen Verfahrens gibt, die ausgeübt werden können, ohne den Schutzumfang der Patentansprüche zu verlassen.

## Ansprüche

1. Verfahren zur Messung der Abweichung einer Drehbewegung eines ersten Teils (2) einer Maschine von einer Kreisbewegung eines zweiten Teils (3) derselben Maschine, insbesondere bei einer numerisch gesteuerten Werkzeugmaschine, wobei

   - die Drehbewegung durch Rotation des ersten Maschinenteils (2) um eine Drehachse (4) erzeugt wird,

   - die Kreisbewegung durch Translation des zweiten Maschinenteils (3) entlang zwei Translationsachsen (X,Y) erzeugt wird, derart, dass der zweite Maschinenteil (3) eine Kreisbahn (C1) um ein Zentrum (O) davon beschreibt, ohne eine Rotation relativ zum ersten Maschinenteil (2) auszuführen,

   - die Translationsachsen (X,Y) eine im wesentlichen rechtwinklig zu Drehachse (4) liegende Bewegungsebene (XY) definieren, wobei die Kreisbahn (C1) in dieser Bewegungsebene (XY) liegt,

   - am einen der Maschinenteile (3) ein Abtaster (5) angeordnet wird, der in der Bewegungsebene (XY) einen kreisförmigen Querschnitt (C0) mit einem Zentrum (Z) aufweist und stets in zwei zur Bewegungsebene (XY) parallelen Messrichtungen (A,B) zugleich empfindlich ist,

   - am anderen Maschinenteil (2) eine Antastfläche (8) angeordnet wird,

   - der Abtaster (5) vor der Messung relativ zur Antastfläche (8) so angeordnet und daran angedrückt wird, dass er in der Bewegungsebene (XY) eine Soll-Auslenkung (d) erfährt, und

   - die auf die Messrichtungen (A,B) projizierten Auslenkungen (a',b') des Abtasters (5) in elektrische Signale umgesetzt werden, die ihrerseits auf einem kartesischen Zweikoordinatendiagramm (X',Y') abgebildet werden,

   **dadurch gekennzeichnet, dass**

   - der Abtaster (5) ausserhalb der Drehachse (4) und da von um mehr als den Betrag der Soll-Auslenkung (d) versetzt angeordnet wird,

- das Zentrum (O) der Kreisbahn (C1) im wesentlichen auf der Drehachse (4) angeordnet wird,

- während der Messung die Drehbewegung und die Kreisbewegung so aufeinander abgestimmt werden, dass das Zentrum (Z) des Abtasters (5) unter Vorgabe einer Konstanthaltung der Grösse der Soll-Auslenkung (d) eine Hilfsbewegung im wesentlichen entlang einer zur Kreisbahn (C1) konzentrischen Hilfskreisbahn (C2) ausführt, und

- Abweichungen der Ist-Auslenkung (a',b') von der Soll-Auslenkung (a,b) erkennbar und gegebenenfalls messbar dargestellt werden, um der Bestimmung von Abweichungen zwischen den Drehbewegungen und den Kreisbewegungen der Maschine zu dienen.

2. Verfahren nach Anspruch 1, dadurch gekennzeichnet, dass die Antastfläche (8) eine einzige Ebene (E0) umfasst, die in einem vorbestimmten Winkel ($\beta$) zu einem von der Drehachse (4,O) zum Zentrum (Z) des Abtasters (5) geführten Radius (r) angeordnet wird.

3. Verfahren nach Anspruch 2, dadurch gekennzeichnet, dass die einzige Ebene (E0) im wesentlichen rechtwinklig, parallel oder in einem Winkel von 45° zu einem von der Drehachse (4,O) zum Zentrum (Z) des Abtasters (5) geführten Radius (r) und dabei parallel zur Drehachse (4) angeordnet wird.

4. Verfahren nach Anspruch 1, dadurch gekennzeichnet, dass die Antastfläche (8) zwei Ebenen (E1,E2) umfasst, die zusammen einen Flächenwinkel (E1 ^ E2) bilden, dessen winkelteilende Ebene (W) in einem vorbestimmten Winkel ($\beta$) zu einem von der Drehachse (4,O) zum Zentrum (Z) des Abtasters (5) geführten Radius (r) angeordnet wird.

5. Verfahren nach Anspruch 4, dadurch gekennzeichnet, dass die winkelteilende Ebene (W) im wesentlichen rechtwinklig, parallel oder in einem Winkel von 45° zu einem von der Drehachse (4,O) zum Zentrum (Z) des Abtasters (5) geführten Radius (r) und die Kante (K) im wesentlichen parallel zur Drehachse (4) angeordnet werden.

6. Verfahren nach Anspruch 4, dadurch gekennzeichnet, dass die beiden Ebenen (E1,E2) der Antastfläche (8) im wesentlichen rechtwinklig zueinander angeordnet werden.

7. Verfahren nach Anspruch 1, dadurch gekennzeichnet, dass der Abtaster (5) an demjenigen Maschinenteil (3) befestigt ist, der die Kreisbewegung ausführt, während die Antastfläche (8) an demjenigen Maschinenteil (3) befestigt ist, der die Drehbewegung ausführt.

8. Verfahren nach Anspruch 1, dadurch gekennzeichnet, dass der Abtaster (5) an demjenigen Maschinenteil (2) befestigt ist, der die Drehbewegung ausführt, während die Antastfläche (8) an demjenigen Maschinenteil (3) befestigt ist, der die Kreisbewegung ausführt.

9. Anwendung des Verfahrens nach Anspruch 1 zur Messung von Fehlern oder zur Kontrolle der Qualität von Bewegungen einer Maschine, die um eine Drehachse und/oder mit zwei Translationsachsen erzeugt werden, wobei Fehler der Bewegungen um die Drehachse als Radialbewegungen und/oder Taumelbewegungen und/oder Winkelpositionsfehler und/oder Axialbewegungen der Drehachse und Fehler der Bewegungen mit den Translationsachsen als Positionsfehler und/oder Geradheitsfehler und/oder Rechtwinkligkeitsfehler und/oder Kippbewegungen und/oder Rollbewegungen auftreten.

Fig. 1

*Fig.2*

*Fig.3*

Fig.4

*Fig.5*

Fig.6

*Fig.7*

Fig. 8

**Europäisches Patentamt**

# EUROPÄISCHER RECHERCHENBERICHT

Nummer der Anmeldung

## EP 90 12 0504

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | EP-A-0 258 471 (KAKINO YOSHIAKI) <br> * Spalte 2, Zeile 3 - Spalte 5, Zeile 21 * * Figuren 1-11 * <br> — — — — — | 1,9,7,8 | G 05 <br> B 19/18 <br> G 01 B 21/04 |
| | | | **RECHERCHIERTE SACHGEBIETE (Int. Cl.5)** <br><br> G 05 B <br> G 01 B |

Der vorliegende Recherchenbericht wurde für alle Patentansprüche erstellt

| Recherchenort | Abschlußdatum der Recherche | Prüfer |
|---|---|---|
| Den Haag | 20 Februar 91 | NETTESHEIM J.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument